# EUROPÄISCHE PATENTANMELDUNG

(11) **EP 1 132 760 A2**
(43) Veröffentlichungstag der Anmeldung: **12.09.2001**
(21) Anmeldenummer: 01104240.5
(22) Anmeldetag: 22.02.2001
(51) Int. Cl.: G02B 6/44

(54) **Lichtwellenleiter-Kabel und Verfahren zu seiner Herstellung**

(30) Priorität: 23.02.2000 DE 10008164
(71) Anmelder: Kabelwerk Eupen AG, 4700 Eupen (BE)
(72) Erfinder: Böhle Wilfried, 52224 Stolberg (DE)
(74) Vertreter: Bauer, Dirk, Dipl.-Ing. Dipl.-Kfm.

(57) **Zusammenfassung**

Ein Lichtwellenleiter-Kabel (1) weist ein sich in Richtung einer Längsachse erstreckendes Zentralelement (2) zur Aufnahme von Zug- und Schubkräften, eine Vielzahl von wendelförmig um dessen Mantelfläche angeordneten Lichtwellenleitern (4), die bündelweise zusammengefaßt sind, ein unter Wassereinwirkung aufquellendes und in Richtung der Längsachse des Lichtwellenleiter-Kabels verteilt angeordnetes Quellematerial sowie eine einen äußeren Abschluß bildende Ummantelung (8) auf. Um eine zuverlässige, kostengünstig herstellbare und keine aufwendigen Reinigungsarbeiten beim Anschluß des Kabels verursachende Abdichtung gegen sich in Längsrichtung des Kabels ausbreitendes Wasser zu erzielen, wird vorgeschlagen, daß das Quellmaterial eine in eine thermoplastische Matrix eingebettete quellfähige Substanz aufweist.

## Beschreibung

Die Erfindung betrifft ein Lichtwellenleiter-Kabel mit einem sich in Richtung seiner Längsachse erstreckenden Zentralelement zur Aufnahme von Zug- und Schubkräften, einer Vielzahl von wendelförmig um dessen Mantelfläche angeordneten Lichtwellenleitern, einem unter Wassereinwirkung aufquellenden und in Richtung der Längsachse des Lichtwellenleiter-Kabels verteilt angeordneten Quellmaterial sowie einer einen äußeren Abschluß bildenden Ummantelung.

Derartige Lichtwellenleiter-Kabel sind allgemein bekannt und finden angesichts der hohen Datenübertragungsrate eine ständig zunehmende Verbreitung. Solche Lichtwellenleiter-Kabel sind durch das Eindringen von Wasser in das Kabelinnere gefährdet. Die Gefährdung besteht zum einen darin, daß die Lichtwellenleiter, d.h. in der Regel Glasfasern, beim Gefrieren des eingedrungenen Wassers mechanische Beschädigungen erleiden können. Zum anderen werden die Dämpfungseigenschaften des Kabels durch die Anwesenheit von Wasser verschlechtert. Außerdem kann es zu einer unerwünschten Reaktion zwischen dem Wasser und dem Lichtwellenleitermaterial kommen, wodurch örtliche Dämpfungsspitzen hervorgerufen werden. Aus diesem Grunde ist es bei derartigen Lichtwellenleiter-Kabeln wichtig zu verhindern, daß Wasser, das an einer lokal begrenzten Beschädigung des Außenmantels in das Kabelinnere eindringt, sich in dessen Längsrichtung ungehindert verbreiten kann.

Der sogenannte Längswasserschutz bekannter Lichtwellenleiter-Kabel erfolgt üblicherweise in der Art, daß die Verseilhohlräume mit einem Petrolat, d.h. einem langkettigen Kohlenwasserstoff, gefüllt werden. Ein Nachteil bei der Verwendung eines derartigen Petrolats besteht darin, daß beim Anschluß eines Kabels dieses Petrolat von den einzelnen Lichtwellenleitern entfernt werden muß. Dieses Entfernen ist sehr zeitaufwendig und erfordert Lösungsmittel (beispielsweise Waschbenzin, Aceton o. ä.), die aus gesundheitlichen Aspekten nicht unbedenklich sind. Alternativ zu Petrolat ist auch die Verwendung gelartiger Füllstoffe üblich, wobei die Nachteile bei der Reinigung der Einzelader dieselben sind.

Es sind auch Lichtwellenleiter-Kabel bekannt, bei denen anstelle von Petrolat ein pulverförmiges Quellmittel im Bereich der Seele des Kabels verwendet wird. Dieses pulverförmige Quellmittel hat jedoch den Nachteil, daß es beim Anschluß eines derartigen Kabels zu unvermeidlichen Verschmutzungen durch das dann herausfallende Quellmittel kommt.

Zum Stand der Technik zählen auch Lichtwellenleiter-Kabel, bei denen im Bereich sogenannter Rovings, die aus Aramid oder Lichtwellenleitern bestehen und um die Lichtwellenleiter herum, jedoch innerhalb der äußeren Ummantelung, angeordnet sind, zwei Lagen eines Vliesmaterials angeordnet sind, zwischen denen sich das Quellmaterial befindet. Die Lagen des Vliesmaterials und des Quellmittels werden in Form eines endlichen Bandes verarbeitet, das im Bereich einer in Längsrichtung des Kabels verlaufenden Längsnaht eine Überlappung aufweist. Ein derartiger mehrlagiger Aufbau ist verhältnismäßig aufwendig und führt zu einem vergleichsweise komplizierten Herstellungsprozeß. Außerdem ist das Vliesmaterial verhältnismäßig teuer.

Der Erfindung liegt die Aufgabe zugrunde, ein Lichtwellenleiter-Kabel vorzuschlagen, bei dem auf kostengünstige Weise ein Schutz vor der Ausbreitung von eindringendem Wasser in Längsrichtung gewährleistet ist, wobei gleichzeitig bei der Montage bzw. dem Anschluß derartiger Kabel keine aufwendigen Reinigungsarbeiten erforderlich sein sollen.

Ausgehend von einem Lichtwellenleiter-Kabel der eingangs beschriebenen Art, wird diese Aufgabe erfindungsgemäß dadurch gelöst, daß das Quellmaterial eine in eine thermoplastische Matrix eingebettete quellfähige Substanz aufweist.

Ein derartiges Material kann aufgrund der thermoplastischen Eigenschaften beispielsweise als Strang, insbesondere bei entsprechend erhöhten Temperaturen, verarbeitet werden. Da das Quellmaterial bei dem Herstellungsprozeß des erfindungsgemäßen Lichtwellenleiter-Kabels in Granulatform eingesetzt werden kann, werden Unterbrechungen des Herstellungsprozesses, wie sie am Ende einer Rolle des Vliesmaterials auftreten, vermieden. Im Gegensatz zu pulverförmigem Quellmaterial zeichnet sich die in eine thermoplastische Matrix eingebettete quellfähige Substanz gemäß der Erfindung dadurch aus, daß die Verarbeitungseigenschaften sehr gut sind, da insbesondere Reinigungsarbeiten vor oder im Anschluß an die Montage bzw. den Anschluß nicht erforderlich sind. Bei der quellfähigen Substanz handelt es sich zum Beispiel um quervernetzte Polymere mit wasserbindenden Gruppen, wie beispielsweise Polyacrylsäure. Vorteilhafterweise besteht die thermoplastische Matrix aus Ethylen-Vinyl-Acetat (EVA).

Wenn das Quellmaterial in Form eines parallel zur Längsachse des Lichtwellenleiter-Kabels verlaufenden Bandes auf die Mantelfläche des Zentralelements und in Form eines weiteren, parallel zur Längsachse des Lichtwellenleiter-Kabels verlaufenden Bandes auf die Lichtwellenleiter oder deren Ummantelung aufgebracht ist, wobei beide Bänder in einer durch die Längsachse verlaufenden Ebene und auf derselben Seite der Längsachse angeordnet sind, läßt sich mit minimalem Einsatz des Quellmaterials ein sehr wirkungsvoller Längswasserschutz erzielen. Bei einer wendelförmigen Anordnung der Lichtwellenleiter um das Zentralelement schneiden diese die Bänder in einem spitzen Winkel, so daß jedes Band leicht wellenförmig verläuft und zum Teil in die Zwischenräume zwischen benachbarten Wendeln von Lichtwellenleitern bzw. benachbarten Ummantelungen von Lichtwellenleiter-Bündeln eindringt. Auf diese Weise wird gewährleistet, daß nach einem Aufquellen des Quellmaterials die zwickelförmigen Hohlräume zwischen benachbarten Bündeln von Lichtwellenleitern bzw. benachbarten Ummantelungen von Lichtwellenleiter-Bündeln verschlossen werden, so daß wendelförmige, abgeschlossene Kammern entstehen, die die Ausbreitung eindringenden Wassers in Längsrichtung des Kabels lediglich um einen solchen Betrag gestatten, der der Steigung der Wendel der Lichtwellenleiter bzw. deren Ummantelung entspricht.

Die Erfindung weiter ausgestaltend, wird vorgeschlagen, daß die Bänder im schmelzflüssigen Zustand aufgebracht sind, wodurch eine verbesserte Anpassung des Bandes an die sich zwikkelförmig verkleinernden Zwischenräume zwischen benachbarten Bündeln von Lichtwellenleitern bzw. Ummantelungen von Lichtwellenleiter-Bündeln erzielt wird.

Eine alternative Ausführungsform des erfindungsgemäßen Kabels besteht darin, das Quellmaterial auf eine Trägerbahn aufzubringen, die in Längsrichtung des Lichtwellenleiter-Kabels verläuft, die Lichtwellenleiter oder die diese außen umgebenden Roving-Fäden ummantelt und selbst von der den äußeren Abschluß bildenden Ummantelung umgeben ist, wobei das Quellmaterial auf der Trägerbahn den Lichtwellenleitern oder den Roving-Fäden zugewandt ist.

Hierdurch kann eine sehr zuverlässige und nur eine verhältnismäßig geringe Menge an Quellmaterial erfordernde Abdichtung im Bereich der Rovings oder der Lichtwellenleiter erzielt werden.

Aus fertigungstechnischer Sicht ist es zu bevorzugen, wenn das Quellmaterial in schmelzflüssigem Zustand auf die Trägerbahn aufgesprüht ist, vorzugsweise in Form feinster wirr verteilter Fäden. Hierdurch kann der Materialeinsatz weiter reduziert werden. Vorzugsweise ist die Trägerbahn eine Folienbahn.

Eine andere Ausgestaltung der Erfindung sieht vor, daß zumindest ein Teil der Roving-Fäden mit dem Quellmittel beschichtet ist.

Sofern mindestens zwei Lagen von Roving-Fäden vorhanden sind und Roving-Fäden benachbarter Lagen jeweils gegenläufig zueinander gewendelt sind, ist es sinnvoll, daß auf jeder Lage zumindest ein Roving-Faden beschichtet ist. Durch die sich kreuzenden beschichteten Roving-Fäden werden wiederum abgeschlossene Abschnitte erzeugt, die eine unkontrollierte Ausbreitung von eingedrungenem Wasser in Längsrichtung des Kabels verhindern.

Die Erfindung weiter ausgestaltend ist vorgesehen, daß das Quellmaterial auf jeden Lichtwellenleiter einzeln aufgebracht ist, wobei die zwischen den Lichtwellenleitern und einer Ummantelung nach der Herstellung verbleibende Hohlräume infolge einer Wasserinfiltration von dem Quellmaterial im aufgequollenen Zustand im wesentlichen vollständig ausgefüllt werden. Dabei werden vorzugsweise die Lichtwellenleiter an ihrer Oberfläche vollständig mit dem Quellmaterial nach Art eines Coatings ummantelt. Auf diese Weise kann eine sehr gleichmäßige Verteilung des Quellmaterials in Längsrichtung des Kabels erzielt und daher ein sehr zuverlässiger Verschluß der Bündelader bei einem Wassereintritt an nahezu beliebiger Stelle garantiert werden.

Ferner wird vorgeschlagen, daß jeweils innerhalb einer Ummantelung eine Mehrzahl von Lichtwellenleitern zusammengefaßt sind, wobei eine Mehrzahl derartiger Ummantelungen wendelförmig um ein Zentralelement herum angeordnet ist.

Aus verfahrenstechnischer Sicht ist es besonders vorteilhaft, wenn die Lichtwellenleiter einzeln oder bündelweise mittels einer Abstreifdüse mit dem im schmelzflüssigen Zustand vorliegenden thermoplastischen Material, in dessen Matrix die quellfähige Substanz eingebettet ist, beschichtet sind.

Eine vorteilhafte Weiterbildung der Erfindung besteht außerdem darin, daß eine Mehrzahl von Lichtwellenleitern mittels einer gemeinsamen Beschichtung aus Quellmaterial zu jeweils einem Bändchen oder Bündel zusammengefaßt sind, wobei mehrere Bändchen oder Bündel von einer Ummantelung umgeben sind. Vorzugsweise wird eine derartige Ummantelung zur Stabilitätserhöhung noch von Roving-Fäden umgeben und anschließend mit einem Außenmantel versehen.

Um die Belegung der einzelnen Adern besser unterscheiden und eine einzelne Ader mit möglichst geringem Aufwand erkennen zu können, wird vorgeschlagen, daß die Bändchen oder Bündel mit unterschiedlichen farbigen Beschichtungen versehen sind.

Eine alternative Ausgestaltung der Erfindung sieht vor, daß das Quellmaterial während des Verseilungsvorgangs bei der Kabelherstellung im noch offenen Verseilverbund auf die einzelnen Lichtwellenleiter aufgebracht ist. Da der Verseilverbund bei der Einbringung des Quellmaterials noch offen ist, erreicht eine hinreichende Menge des Quellmaterials den Zentralbereich des Verseilverbundes, in dem in der Regel ein versteifendes Zentralelement angeordnet ist. Auf diese Weise werden auch die als besonders kritisch anzusehenden Kernzwickel in Falle eines Wassereinbruchs sicher verschlossen.

Aus verfahrenstechnischer Hinsicht bietet ein entsprechendes Herstellverfahren den Vorteil, daß der gerätetechnische Aufwand reduziert werden kann, da das Quellmaterial nur an einer einzigen Stelle, nämlich in der Nähe des Verseilpunktes, aufgebracht werden muß. Durch die dort vorliegende Rotation der Verseilung ist automatische eine sehr gleichmäßige Verteilung des Quellmaterials auf sämtliche Einzelfasern bzw. Ummantelungen von Bündeladern sichergestellt.

Nach der Erfindung ist es zu bevorzugen, wenn das Quellmaterial von einer stillstehenden Sprühdüse aus auf einen rotierenden Verseilungskorb aufgesprüht wird.

Die Festigkeit des Verseilverbundes wird erhöht, wenn das thermoplastische Material nach seiner Aushärtung Klebeeigenschaften aufweist.

Die Erfindung wird nachfolgend anhand eines Ausführungsbeispiels der Erfindung, das in der Zeichnung dargestellt ist, näher erläutert. Es zeigt:
- Fig. 1: einen Querschnitt durch ein Lichtwellenleiter-Kabel;
- Fig. 2a: einen Ausschnitt aus dem Kabel gemäß Fig. 1 im nichtgequollenen Zustand des Quellmaterials;
- Fig. 2b: wie Fig. 2a, jedoch im gequollenen Zustand des Quellmaterials;
- Fig. 3: einen Längsschnitt durch das Kabel gemäß Fig. 1;
- Fig. 4: eine Draufsicht auf einen Abschnitt einer Folienbahn mit aufgesprühten Fäden des Quellmaterials,
- Fig. 5: einen Querschnitt durch einen beschichteten Roving- oder Garn-Faden.
- Fig. 6: einen Querschnitt durch einen mit quellbarem Material beschichteten einzelnen Lichtwellenleiter
- Fig. 7 a: einen Querschnitt durch eine Bündelader eines Lichtwellenleiter-Kabels mit beschichteten Einzeladern innerhalb einer Ummantelung im nicht gequollenen Zustand des Quellmaterials
- Fig. 7b: wie Fig. 7 a, jedoch nach einem Wassereintritt, d.h. im gequollenen Zustand des Quellmaterials
- Fig. 8 a: einen Querschnitt durch ein aus fünf Einzeladern zusammengefaßtes Bändchen

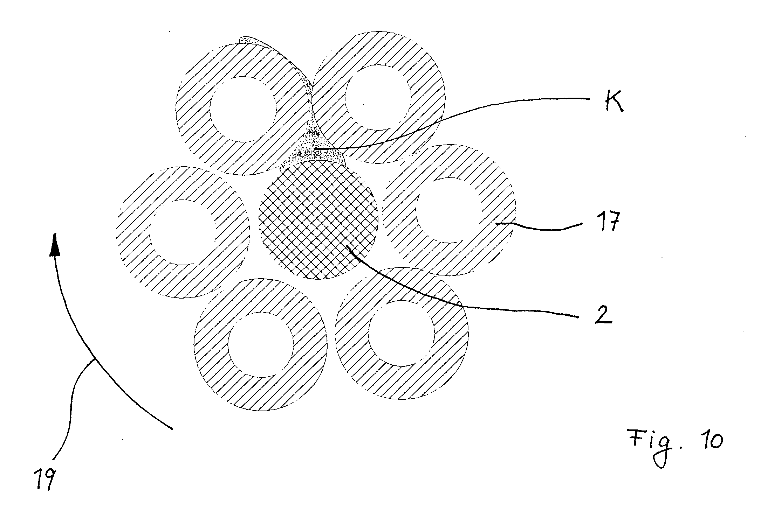

- Fig. 8 b: einen Querschnitt durch ein aus sechs Einzeladern zusammengefaßtes Bündel
- Fig. 9: einen Querschnitt durch einen offenen Verseilverbund mit einer Düse zur Aufbringung des Quellmaterials auf die Bündel adern und das Zentralelement und
- Fig. 10: wie Fig. 9, jedoch in einem im wesentlichen geschlossenen Zustand des Verseilverbundes.

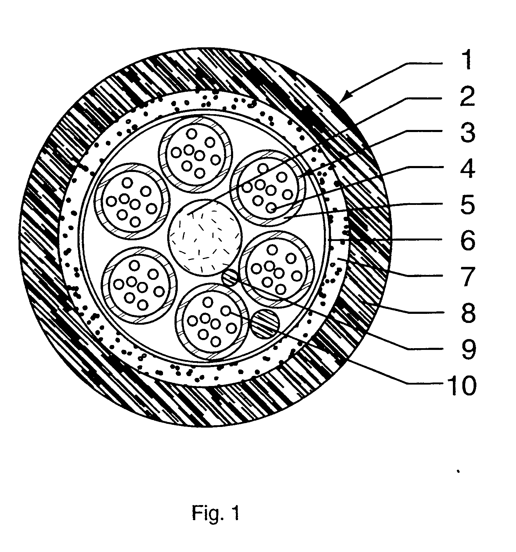

Ein in Fig. 1 dargestelltes Lichtwellenleiter-Kabel 1 besteht aus einem im Querschnitt kreisförmigen, in Längsrichtung des Kabels 1 verlaufenden Zentralelement 2, um das herum sechs wendelförmig gewickelte Bündel 3 von Lichtwellenleitern 4 angeordnet sind. Jedes der sechs Bündel 3 weist zwölf Lichtwellenleiter 4 auf, die innerhalb einer rohrförmigen Ummantelung 5 angeordnet und darin von einer gelartigen Masse umgeben sind.

Der Unterscheidbarkeit halber sind sowohl die einzelnen Lichtwellenleiter 4 als auch die Ummantelungen 5 verschiedenfarbig ausgeführt.

Die Bündel 5 sind von einer kreisförmig angeordneten Trägerbahn 6 aus einer Kunststoffolie umgeben, die einen in Längsrichtung des Kabels 1 verlaufenden Überlappungsbereich, der in Fig. 1 nicht erkennbar ist, aufweist. Die Trägerbahn 6 ist auf der nach außen gewandten Seite mit einer Vielzahl von wirr verlaufenden und im schmelzflüssigen Zustand auf die Trägerbahn 6 aufgespritzten Fäden 6' eines Quellmaterials versehen, das eine in eine thermoplastische Matrix eingebettete quellfähige Substanz aufweist.

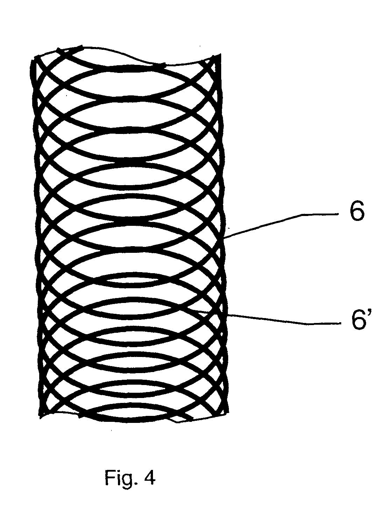

Fig. 4 zeigt eine Draufsicht auf einen Abschnitt einer derartigen Trägerbahn 6 im ebenen Zustand. Die Fäden 6' werden erst unmittelbar vor der Verarbeitung der Trägerbahn 6 bei der Kabelherstellung aufgesprüht und besitzen bei der Verarbeitung noch plastische Eigenschaften.

Um die Trägerbahn 6 herum befinden sich in Längsrichtung des Kabels 1 in Wendelform verlaufende Rovings 7, bei denen es sich um Fäden aus Aramid bzw. Lichtwellenleiter handelt. Hierdurch wird die Zugbelastbarkeit des Kabels 1 weiter verbessert.

Den äußeren Abschluß des Kabels 1 bildet eine kreisringförmige Ummantelung 8 aus einem thermoplastischen Kunststoff.

Der Schutz gegen eine Ausbreitung eventuell eingedrungenen Wassers in Längsrichtung des Kabels 1 wird im Bereich der Rovings 7 mit Hilfe der den Rovings 7 zugewandten Quellmaterial-Fäden 6' auf der Trägerbahn 6 bewirkt. Zur Abdichtung der Bündel 3 verlaufen in Längsrichtung des Kabels 1 zwei Bänder 9 und 10 aus demselben Quellmaterial, das auch auf der Trägerbahn 6 aufgebracht ist. Das Band 10 liegt zum einen an der äußeren Mantelfläche des Zentralelements 2 und zum anderen an den gewendelten Ummantelungen 5 der Bündel 3 von Lichtwellenleitern 4 an.

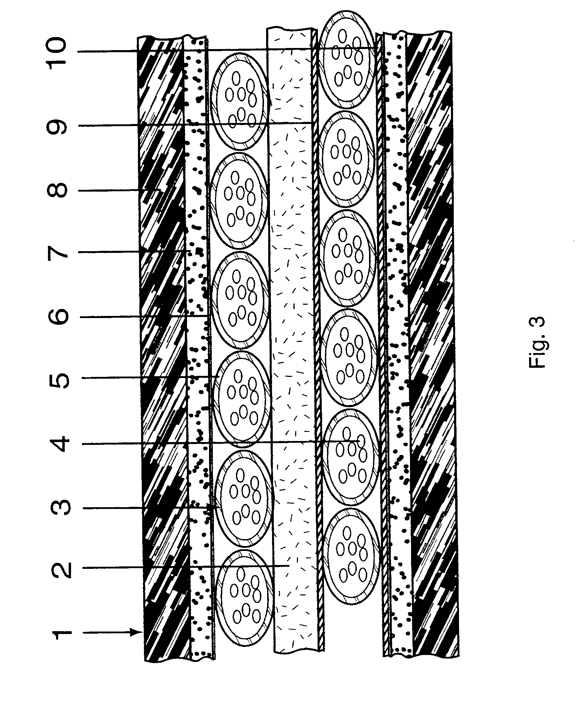

Dagegen kommt das zweite Band 9 ebenfalls an den Ummantelungen 5 und zum anderen an der Innenseite der kreisförmig gewickelten Trägerbahn 6 zur Anlage. Der Verlauf der Bänder 9 und 10 über bzw. unter den wendelförmig verlaufenden Bündeln 3 läßt sich sehr anschaulich dem Längsschnitt gemäß Fig. 3 entnehmen.

Da beide Bänder im schmelzflüssigen Zustand bei der Herstellung des Kabels 1 aufgetragen werden, erfolgt eine in Fig. 3 nicht erkennbare teilweise Anpassung der Bänder 9 und 10 an die zwickelförmigen Senken zwischen benachbarten Ummantelungen 5 der Bündel 3.

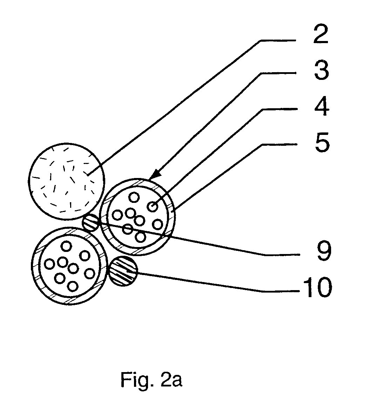

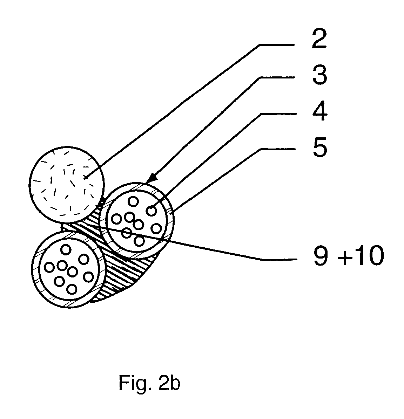

Aus den Fig. 2a und 2b läßt sich die Wirkungsweise des Quellmaterials erkennen. Während in Fig. 2a die Bänder 9 und 10 im trockenen, d.h. nicht aktivierten Zustand dargestellt sind, zeigt Fig. 2b die beiden Bänder 9 und 10, nachdem diese mit Wasser in Kontakt gekommen und daher aufgequollen sind. Durch die starke Volumenzunahme infolge des Wasserkontakts werden die zwickelförmigen Zwischenräume zwischen benachbarten Ummantelungen 5 der Bündel 3 vollständig verschlossen. Aufgrund des wendelförmigen Verlaufs der Bündel 3 bzw. Ummantelungen 5 und des Verlaufs der Bänder 9 und 10 in parallele Richtung zur Kabellängsachse ist ein Verschluß der Zwischenräume zwischen benachbarten Ummantelungen 5 im Abstand deren Steigung ausreichend, da hierdurch abgeschlossene Hohlräume entstehen und somit eine ungehinderte Ausbreitung des Wassers in den wendelförmigen Hohlräumen unmöglich gemacht wird.

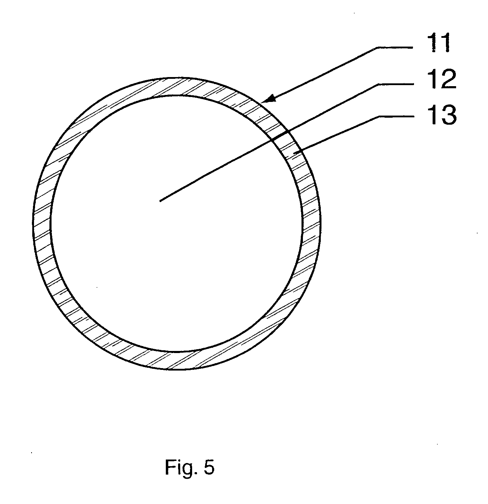

Fig. 5 zeigt schließlich noch einen Querschnitt durch einen aus Aramid oder Lichtwellenleitern bestehenden Roving-Faden 11. Dieser besteht aus einem Fadenkern 12 aus einer Glas- oder Aramidfaser und einer diesen vollflächig umgebenden Beschichtung 13 aus dem Quellmaterial, das aus einer in einem thermoplastischen Material eingebetteten quellfähigen Substanz besteht. Die Beschichtung 13 besitzt eine Dicke von ca. 200 *µ*m. Anstelle bei einem aus Glas- oder Aramidfasern bestehenden Roving ist eine derartige Beschichtung auch bei einem Garn aus beliebigem Material möglich. Wird bei einem Lichtwellenleiter-Kabel mit zwei gegensinnig zueinander gewickelten Lagen von Rovings pro Lage mindestens ein beschichteter Roving 11 gemäß Fig. 5 eingesetzt, so führt dies zu einer zuverlässigen Verhinderung einer Wasserausbreitung in Längsrichtung im Roving-Bereich. Die in Fig. 5 gezeigte Beschichtung eines Rovings ist somit als alternative Maßnahme zu der Folienbahn mit aufgesprühten Quellmaterialfäden anzusehen. Prinzipiell ist jedoch auch eine kombinierte Anwendung beider Maßnahmen zur weiteren Verbesserung des Längswasserschutzes möglich.

Bei Versuchen hat sich herausgestallt, daß die Verwendung eines Ethylen-Vinyl-Acetats als thermoplastische Matrix als besonders vorteilhaft anzusehen ist. Bei der hierin eingebetteten quellfähigen Substanz kann es sich beispielsweise um quervernetzte Polymere mit wasserbindenden Gruppen, wie beispielsweise Polyacrylsäure, handeln. Vorzugsweise wird diese Substanz in einer Körnung > 100 *µ*m eingesetzt.

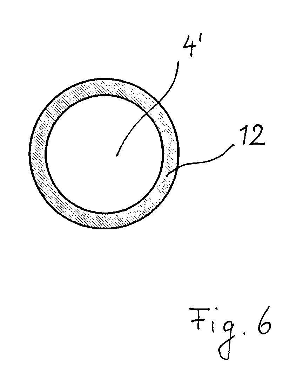

Fig. 6 zeigt im Querschnitt einen einzelnen Lichtwellenleiter 4', der mit einer Schicht 12 aus einem thermoplastischen Quellmaterial versehen ist. Das thermoplastische Quellmaterial wird in schmelzflüssigem Zustand, beispielsweise mit Hilfe einer Abstreifdüse, auf den Lichtwellenleiter 4' aufgebracht. Die Dicke der Beschichtung 12 beträgt ca. 100 µm.

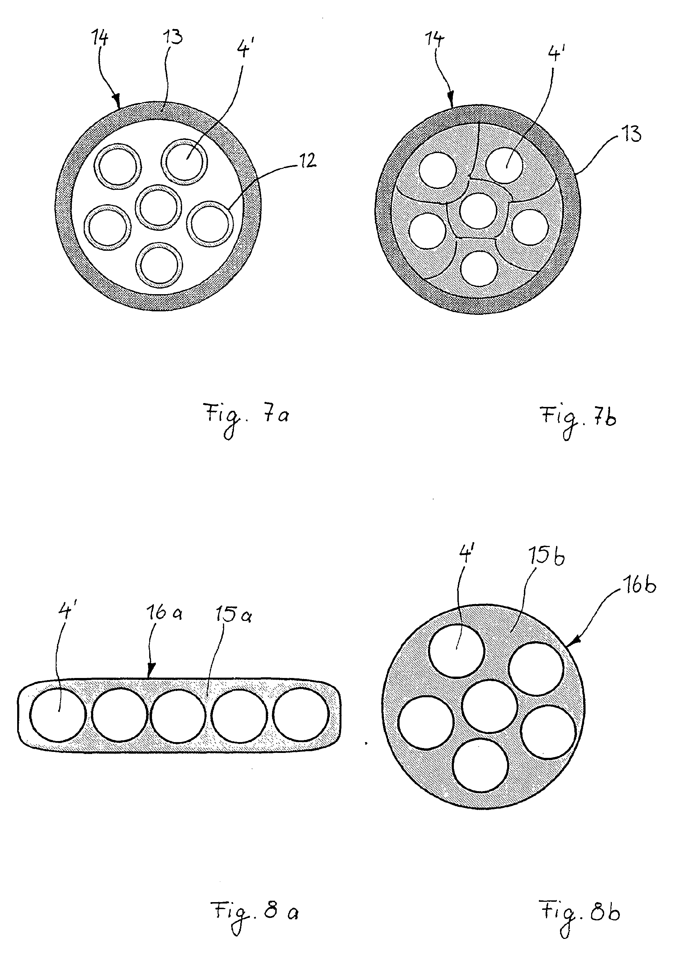

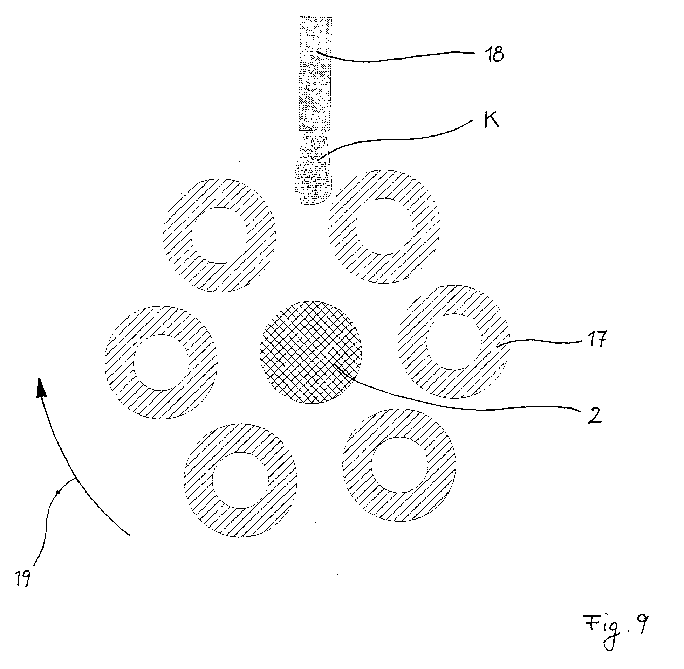

Der Fig. 7 a läßt sich entnehmen, wie sechs der in Fig. 6 gezeigten beschichteten Lichtwellenleiter 4' innerhalb einer gemeinsamen Ummantelung 13 angeordnet sind und somit eine sogenannte Bündelader 14 bilden. Im ungequollenen Zustand des Quellmaterials verbleiben zwischen den einzelnen Lichtwellenleitern 4' und der Ummantelung 13 Hohlräume.

Wie sich aus Fig. 7 b ergibt, sind diese Hohlräume im gequollenen Zustand des Quellmaterials vollständig ausgefüllt, so daß eine Ausbreitung von Wasser in Längsrichtung der Lichtwellenleiter 4' innerhalb der Ummantelung 13 der Bündelader 14 unmöglich ist. Das Quellmaterial ist nach dem Wassereintritt auf ein Vielfaches eines ursprünglichen Volumens angewachsen. Im Gegensatz zu mit Petrolat oder Gel gefüllten Bündeladern nach dem Stand der Technik ist die Möglichkeit zum Anschluß der Lichtwellenleiter 4' wesentlich vereinfacht, da sich die Beschichtung 12 wesentlich einfacher von den Lichtwellenleitern 4' entfernen läßt als beispielsweise Petrolat.

Bei hochfasrigen Bündeladern ist es sinnvoll, mehrere Fasern mit Hilfe einer zusammenhängenden Beschichtung 15a oder 15b aus dem thermoplastischen Quellmaterial zu einem Bändchen 16a oder einem Bündel 16b, wie diese in den Figuren 8a und 8b, zu gruppieren. Innerhalb einer Ummantelung sind mehrere Bändchen 16a oder mehrere Bündel 16b angeordnet, die jeweils unterschiedliche Farben der Beschichtungen 15a, 15b besitzen. Die Bändchen 16a oder die Bündel 16b sind locker nebeneinander innerhalb einer gemeinsamen rohrförmigen Ummantelung angeordnet. Im Falle einer Wasserinfiltration werden wiederum sämtliche Hohlräume zwischen den Lichtwellenleitern und der Ummantelung durch Aufquellung verschlossen. Diese Ummantelung kann mit Roving-Fäden und einem diese umgebenden Außenmantel, der in den Figuren nicht dargestellt ist, umgeben sein. Das in Fig. 8a gezeigte Bändchen 16a besteht aus fünf äquidistant und in einer Reihe nebeneinander angeordneten Lichtwellenleitern 4', wohingegen das in Fig. 8b gezeigte Bündel aus sechs Lichtwellenleitern 4' besteht, von denen fünf kreisförmig um einen zentralen Lichtwellenleiter 4' angeordnet sind.

Ferner ist in Fig. 9 noch dargestellt, wie bei einem aus einem Zentralelement 2 und 6 wendelförmig darum gewickelten Bündeladern 17 bestehenden Lichtwellenleiter-Kabel das Quellmaterial im schmelzflüssigen Zustand während des Verseilungsvorgangs aufgebracht wird. Aus einer feststehenden Düse 18 wird das Quellmaterial in Richtung auf das Zentralelement 2 gesprüht, wobei die Bündeladern 17 um die Längsachse des Zentralelements 2 abwechselnd in Richtung des Pfeils 19 und in die entgegengesetzte Drehrichtung rotieren (SZ-Verseilung). Auf diese Weise werden mit dem Quellmaterial sowohl die äußeren Mantelflächen der Bündeladern 17 als auch das Zentralelement 2 beschichtet. Da der Verseilverbund noch offen ist, erreicht eine ausreichend große Menge des Quellmaterials das Zentralelement 2, um den hinsichtlich der Abdichtung ansonsten als kritisch anzusehenden Kernzwickel, d.h. die Bereiche in unmittelbarer Nähe des Zentralelements, hinreichend sicher zu verschließen. Das vorbeschriebene Verfahren zur Herstellung eines Lichtwellenleiter-Kabels zeichnet sich durch seinen besonders niedrigen apparativen Aufwand aus, da lediglich eine einzige stillstehende Düse 18 zum Versprühen des schmelzflüssigen Quellmaterials in Verbindung mit den rotierenden Bündeladern 17 erforderlich ist. Das Quellmaterial weist gute Klebeeigenschaften auf, die nach seiner Aushärtung zu einem guten Zusammenhalt von Zentralelement 2 und Bündeladern 17 führen.

Schließlich zeigt Fig. 10 noch den Verseilverbund in einem im wesentlichen geschlossenen Zustand. Das Quellmaterial erstreckt sich in die zwickelförmigen Bereiche zwischen jeweils zwei Bündeladern 17 und dem Zentralelement 2. Aufgrund der Wendelung der Bündeladern 17 wird eine Ausbreitung von Wasser in Längsrichtung des Zentralelements 2 verhindert.

Alternativ zu einer Sprühbeschichtung der einzelnen Bündeladern 17 ist auch eine Beschichtung der Bündeladern 17 mit Hilfe jeweils einer Abstreifdüse möglich. Bei dieser, in den Figuren nicht dargestellten, Ausgestaltung des Verfahrens sind somit sechs Düsen erforderlich, um die Bündeladern 17 vor dem Verseilungsvorgang einzeln zu beschichten. Durch die Rotation der Verseilung verteilt sich die auf dem äußeren Mantel der Bündeladern vorhandene Beschichtung des Quellmaterials auch auf dem Zentralelement 2, so daß auch ohne eine direktes Besprühen eine zuverlässige Abdichtung im Bereich der Kernzwickel erzielbar ist.

## Patentansprüche

1. Lichtwellenleiter-Kabel (1) mit einem sich in Richtung seiner Längsachse erstreckenden Zentralelement (2) zur Aufnahme von Zug- und Schubkräften, einer Vielzahl von wendelförmig um dessen Mantelfläche angeordneten Lichtwellenleitern (4), einem unter Wassereinwirkung aufquellenden und in Richtung der Längsachse des Lichtwellenleiter-Kabels (1) verteilt angeordneten Quellmaterial sowie einer einen äußeren Abschluß bildenden Ummantelung (8), **dadurch gekennzeichnet**, daß das Quellmaterial eine in eine thermoplastische Matrix eingebettete quellfähige Substanz aufweist.

2. Lichtwellenleiter-Kabel nach Anspruch 1, **dadurch gekennzeichnet**, daß die thermoplastische Matrix aus Ethylen-Vinyl-Acetat (EVA) besteht.

3. Lichtwellenleiter-Kabel nach Anspruch loder 2, **dadurch gekennzeichnet**, daß das Quellmaterial in Form eines parallel zur Längsachse des Lichtwellenleiter-Kabels (1) verlaufenden Bandes (10) auf die Mantelfläche des Zentralelements (2) und in Form eines weiteren parallel zur Längsachse des Lichtwellenleiter-Kabels (1) verlaufenden Bandes (9) auf die Lichtwellenleiter (4) oder deren Ummantelung (5) aufgebracht ist, wobei beide Bänder (9, 10) in einer durch die Längsachse verlaufenden Ebene und auf derselben Seite der Längsachse angeordnet sind.

4. Lichtwellenleiter-Kabel nach Anspruch 3, **dadurch gekennzeichnet**, daß die Bänder (9, 10) im schmelzflüssigen Zustand aufgebracht sind.

5. Lichtwellenleiter-Kabel nach Anspruch 1 oder 2, **dadurch gekennzeichnet**, daß das Quellmaterial auf eine Trägerbahn (6) aufgebracht ist, die in Längsrichtung des Lichtwellenleiter-Kabels (1) verläuft, die Lichtwellenleiter (4) oder deren Ummantelung (5) ummantelt und selbst von wendelförmigen, in Längsrichtung des Lichtwellenleiter-Kabels verlaufenden Roving-Fäden (7) umgeben ist, wobei das Quellmaterial auf der Trägerbahn (6) den Roving-Fäden (7) zugewandt ist.

6. Lichtwellenleiter-Kabel nach Anspruch 5, **dadurch gekennzeichnet**, daß das Quellmaterial in schmelzflüssigem Zustand auf die Trägerbahn (6), die vorzugsweise eine Folienbahn ist, aufgesprüht ist.

7. Lichtwellenleiter-Kabel nach Anspruch 6, **dadurch gekennzeichnet**, daß das Quellmaterial in Form feinster, wirr verteilter Fäden (6') aufgesprüht ist.

8. Lichtwellenleiter-Kabel nach einem der Ansprüche 1 bis 7, **dadurch gekennzeichnet**, daß zumindest ein Teil der Roving-Fäden (11) mit dem Quellmaterial beschichtet ist.

9. Lichtwellenleiter-Kabel nach Anspruch 8, **dadurch gekennzeichnet**, daß zumindest zwei Lagen von Roving-Fäden (11) vorhanden sind, wobei Roving-Fäden (11) benachbarter Lagen jeweils gegenläufig gewendelt sind, und daß aus jeder Lage mindestens ein Roving-Faden (11) beschichtet ist.

10. Lichtwellenleiter-Kabel nach einem der Ansprüche 1 bis 9, **dadurch gekennzeichnet**, daß das Quellmaterial auf jeden Lichtwellenleiter (4') einzeln aufgebracht ist, wobei die zwischen den Lichtwellenleitern (4') und einer Ummantelung (13) nach der Herstellung verbleibenden Hohlräume infolge einer Wasserinfiltration von dem Quellmaterial im aufgequollenen Zustand im wesentlichen ausfüllbar sind.

11. Lichtwellenleiter-Kabel nach Anspruch 10, **dadurch gekennzeichnet**, daß die Lichtwellenleiter (4') an ihrer Oberfläche vollständig mit dem Quellmaterial ummantelt sind.

12. Lichtwellenleiter-Kabel nach Anspruch 10 oder 11, **dadurch gekennzeichnet**, daß die Lichtwellenleiter (4') einzeln, bändchen- oder bündelweise mittels einer Abstreifdüse mit dem im schmelzflüssigen Zustand vorliegenden Quellmaterial eingebettet sind.

13. Lichtwellenleiter-Kabel nach einem der Ansprüche 10 bis 12, **dadurch gekennzeichnet**, daß eine Mehrzahl von Lichtwellenleitern mittels einer gemeinsamen Beschichtung (15a, 15b) zu jeweils einem Bändchen (16a) oder Bündel (16b) zusammengefaßt sind, wobei mehrere Bändchen (16a) oder Bündel (16b) von einer gemeinsamen Ummantelung umgeben sind.

14. Lichtwellenleiter-Kabel nach Anspruch 13, **dadurch gekennzeichnet**, daß die Bändchen (16a) oder Bündel (16b) mit unterschiedlich farbigen Beschichtungen (15a, 15b) versehen sind.

15. Lichtwellenleiter-Kabel nach einem der Ansprüche 1 bis 14, **dadurch gekennzeichnet**, daß das Quellmaterial während des Verseilungsvorgangs im noch offenen Verseilverbund auf die einzelnen Bündeladern (17) aufgebracht ist.

16. Lichtwellenleiter-Kabel nach Anspruch 15, **dadurch gekennzeichnet**, daß das Quellmaterial Klebeeigenschaften aufweist.

17. Verfahren zur Herstellung eines Lichtwellenleiter-Kabels, **dadurch gekennzeichnet**, daß das im schmelzflüssigen Zustand vorliegende Quellmaterial, in dessen thermoplastische Matrix eine quellfähige Substanz eingebettet ist, während des Verseilvorgangs im noch offenen Verseilverbund auf die einzelnen Lichtwellenleiter oder deren Ummantelungen aufgebracht wird.

18. Verfahren nach Anspruch 17, **dadurch gekennzeichnet**, daß das Quellmaterial von einer stillstehenden Sprühdüse aus auf einen rotierenden Verseilungskorb aufgesprüht wird.
